# EUROPEAN PATENT SPECIFICATION

(11) **EP 3 901 525 B1**
(45) Date of publication and mention of the grant of the patent: **05.06.2024**
(21) Application number: 20171120.7
(22) Date of filing: 23.04.2020
(51) Int. Cl.: F24D 19/10, F24D 10/00, F24F 1/00

(54) **LOCAL ENERGY DISTRIBUTING SYSTEM, LOCAL HEAT EXTRACTING ASSEMBLY AND METHODS FOR CONTROLLING THE SAME**
LOKALES ENERGIEVERTEILUNGSSYSTEM, LOKALE WÄRMEEXTRAKTIONSANORDNUNG UND VERFAHREN ZU DEREN STEUERUNG
SYSTÈME DE DISTRIBUTION D'ÉNERGIE LOCALE, ENSEMBLE D'EXTRACTION DE CHALEUR LOCALE ET PROCÉDÉS DE COMMANDE ASSOCIÉS

(43) Date of publication of application: 27.10.2021
(73) Proprietor: E.ON Sverige AB, 205 09 Malmö (SE)
(72) Inventor: ROSÉN, Per, 227 33 Lund (SE); SKOGSTRÖM, Jacob, 234 42 Lomma (SE); ROSENQVIST, Fredrik, 254 51 Helsingborg (SE); LINDOFF, Bengt, 237 35 Bjärred (SE); CARLSTRÖM, Helen, 237 36 Bjärred (SE)
(74) Representative: AWA Sweden AB

(56) References cited:
- EP-A1- 3 296 647
- WO-A1-02/090832
- WO-A1-2012/172184
- WO-A1-2020/030666
- WO-A2-2010/102626

## Description

### Field of the invention

The present invention relates to distribution of heating and/or cooling by means of a local heat extracting assembly, to a local energy distributing system and to methods for controlling the local heat extracting assembly and a local energy distributing system, respectively.

### Background art

Today, it is common in many parts of the world to provide heating and hot water for various types of buildings, such as residential, industrial, public and commercial buildings, by means of district heating. In district heating systems hot heat transfer fluid is transported in conduits buried in the ground to the areas which are connected to the system. The heat transfer fluid is heated in a district heating plant, in which the thermal energy can be produced in a number of ways. For instance, the thermal energy may be produced by burning a fossil fuel such as oil or gas. It may also be produced e.g. from electrical boilers or as a biproduct from electrical power production. Heat exchangers are generally used for extracting the heat from the heat transfer fluid of the district heating system for providing comfort heating and possibly tap hot water for the buildings connected to the system.

Providing district heating to areas where there is not a high density of buildings, i.e. in heat sparse areas, is today generally not desirable due to prior art district heating systems not being able to provide the desired efficiency during such circumstances. This is amplified as the houses that are being built today has such efficient thermal insulation that their demand for heating from a dedicated heating system is greatly reduced. Prior art district heating systems also suffers from construction costs that are relatively high, which requires a large number of buildings being connected to the system for it to be economically viable.

It is therefore desired to provide a solution to some of the problems with prior art systems for providing heating and/or cooling to a building.

EP 3296647 relates to a local energy distributing system. The local energy distributing system comprises a local feed conduit; a local return conduit; a central heat exchanger connected to a district heating grid having a district feed conduit for an incoming flow of district heat transfer fluid having a first temperature in the range of 50-120°C, and a district return conduit for a return flow of district heat transfer fluid having a second temperature, the second temperature being lower than the first temperature, the second temperature being in the range of 40-60°C, wherein the central heat exchanger is configured to exchange heat from the incoming flow of district heat transfer fluid to an outgoing flow of local heat transfer fluid in the local feed conduit, the outgoing flow of local heat transfer fluid having a temperature of 5-30°C; and a plurality of local heating systems, each having an inlet connected to the local feed conduit and an outlet connected to the local return conduit, wherein each local heating system is configured to provide hot water and/or comfort heating to a building.

WO 2010/102626 discloses a closed loop heating system comprising at least one closed fluid circuit, at least one thermal energy receiving unit and at least one thermal energy releasing unit. The closed loop heating system also comprises a heat pump, transferring thermal energy from at least one first part of said fluid circuit to at least one second part of said fluid circuit.

WO 2020/030666 discloses a local heat extracting assembly. The local heat extracting assembly having one inlet connectable to a local feed conduit of a local energy distributing system, and one outlet connectable to a local return conduit of the local energy distributing system. The local heat extracting assembly comprises: a local heat exchanger configured to extract heat from local heat transfer fluid of the local feed conduit to a heating liquid of a heating circuit configured to circulate the heating liquid in a building for providing comfort heating; and a heat pump configured to pump heat from the heating liquid of the heating circuit or from local heat transfer fluid of the local feed conduit to provide hot tap water to the building. A local energy distributing system comprising a plurality of local heat extracting assembly is further disclosed. Further, a method for extracting heat from the local energy distributing system and a method for distributing energy to a plurality of buildings are disclosed.

WO 2012/172184 discloses a pipe assembly for a district heating network. The pipe assembly comprising a first pipe, a second pipe and, surrounding the first pipe, a first insulating layer arranged to reduce heat transfer from the first pipe outwards in a radial direction, the first pipe being arranged for a first heat transfer medium flow and the second pipe being arranged for a second heat transfer medium flow. The pipe assembly comprises a heat transfer device arranged to transfer heat from an outer surface of the first insulating layer to the second pipe, and a second insulating layer arranged to reduce heat transfer from the heat transfer device and the second pipe outwards in the radial direction, the thermal conductivity of the heat transfer device being substantially better than the thermal conductivity of the first insulating layer and the thermal conductivity of the second insulating layer.

WO02/090832 discloses a procedure and device for controlling the temperature of at least one outbound secondary flow in a secondary circuit from a heat exchanger by means of a primary flow in a primary circuit, via a regulatory member that regulates the primary flow, influenced by a control unit. The enthalpy difference between the inbound primary flow to the heat exchanger and the outbound primary flow from the heat exchanger is determined. The secondary flow is determined. The flow in the primary circuit is determined, and the parameters determined above are supplied to the control unit for controlling the regulatory organ, whereby the primary flow is controlled in dependence of the secondary flow, so that the power supplied to the heat exchanger through the primary flow substantially equals the sum of, partly, the power needed to raise the temperature of the secondary medium from the current initial temperature in to the desired outbound temperature, and, partly, the assumed power requirement for compensating for the energy stored in the heat exchanger, and, partly, the assumed leak power from the heat exchanger.

### Summary of the invention

In view of what stated above, the object of the present invention is to provide a solution to at least some of the problems stated above and to improve on prior art heating/cooling systems.

According to a first aspect, a local energy distributing system is provided. The local energy distributing system comprising: a local energy distributing grid comprising a local feed conduit and a local return conduit; a central heat exchanger connectable to a heat source, the central heat exchanger is configured to exchange heat from the heat source to an outgoing flow of local heat transfer fluid in the local feed conduit, the central heat exchanger being configured to provide an outgoing flow of local heat transfer fluid having a temperature of 10-30°C to achieve a desired ΔT of the local heat transfer fluid between the local feed conduit and the local return conduit, and a plurality of local heat extracting assemblies. Each local heat extracting assembly being connectable to the local energy distributing grid. Each local heat extracting assembly comprises: a local heat pump having a heat pump feed conduit connectable to the local feed conduit and a heat pump return conduit connectable to the local return conduit, the local heat pump being configured to pump heat from local heat transfer fluid of the local energy distributing grid to a heating fluid of a heating circuit configured to circulate the heating fluid in a building for providing comfort heating and/or tap hot water; and a local heat exchanger having a heat extraction side connectable to a cooling circuit arranged in the building, and a heat depositing side comprising an inlet and an outlet both connected to the heat pump return conduit, the local heat exchanger being configured to extract heat from cooling fluid of the cooling circuit for providing comfort cooling in the building and deposit the extracted heat to local heat transfer fluid of the heat pump return conduit; and a pump configured to pump local heat transfer fluid from the local feed conduit via the local heat pump and the local heat exchanger to the local return conduit. The flow of local heat transfer fluid through the local energy distribution system is controlled by the pumps of the local heat extracting assemblies. The local energy distributing system further comprising a central controller configured to control the respective pump in each of the local heat extracting assemblies to achieve a desired circulation of the local heat transfer fluid in the local energy distributing grid.

The local energy distributing system provides for improvements of efficiency. This by e.g. providing a possibility to lower a temperature of the thermal energy grid. Further the complexity of the construction/installation of the system may be reduced. The local energy distributing grid effectively functions as an intermediate heating/cooling grid between the heat source and each local heat extracting assembly, the local energy distributing grid may be easier to install than a regular district heating system.

The local heat extracting assembly may provide improved comfort and efficiency, while the local heat pump allows a lowering of the temperature in the local energy distributing grid. The local energy distributing grid may consequently suffer from less heat losses and require less insulation which leads to a simplified installation. The local heat exchanger allows making use of the cooled returning heat transfer fluid, providing comfort cooling to the building in an energy efficient manner.

The pump may be configured to control the flow of heat transfer fluid through the local heat extracting assembly such that the temperature of the local heat transfer fluid in the heat pump return conduit is between 5°C and 15°C.

The local heat exchanger control valve allows accurate control of the proportion of flow of local heat transfer fluid that flows either directly back to the local return conduit or via the local heat exchanger. The performance of the heat exchanger can thereby be controlled to meet the cooling demands of the building.

The local feed conduit may be made from insulated plastic piping designed for a maximum pressure of 0.6-1 MPa, the local return conduit may be made from un-insulated plastic piping designed for a maximum pressure of 0.6-1 MPa. The low outgoing temperature of the heat transfer fluid enabled by the provision of local heat extracting assemblies comprising local heat pumps allows the returning heat transfer fluid to be cooled to a temperature which close to the ambient ground temperature of the ground surrounding the buried local return conduit, allowing omission of insulation on the local return conduit. The low temperature of the outgoing heat transfer fluid further provides a relatively small temperature difference between the local supply conduit and the surrounding ground, this may provide low thermal losses and permit a reduction in insulation compared to prior art systems. Under certain circumstances, when the ground surrounding the local return conduit is hotter than the returning local heat transfer fluid, the ground may serve to heat the local heat transfer fluid reducing the load on the central heat exchanger.

The desired ΔT of the local heat transfer fluid between the local feed conduit and the local return conduit may be between 5°C and 25°C, preferably 20°C.

Since each local heat extracting assembly comprises a pump, a central circulation pump can thus be omitted, allowing the pumps of each of the local heat extracting assemblies to provide the circulation of local heat transfer fluid through the local energy distributing grid as well as through each local heat extracting assembly. Hence, the pumps of the local heat extracting assemblies may control the flow of local heat transfer fluid through the local energy distributing grid. No central pump is thus needed for circulation of local heat transfer fluid.

Further, since the pump is configured to pump local heat transfer fluid from the local feed conduit via the local heat pump and the local heat exchanger to the local return conduit, the circulation of heat transfer fluid can thus be adapted to the local heat pump, for instance to meet the thermal loads placed there upon.

In a second aspect not forming part of the present invention, a method for controlling a local heat extracting assembly is provided. The method comprises: determining a desired temperature of the local heat transfer fluid in the heat pump return conduit; determining a desired thermal load of the local heat extracting assembly; and controlling the local heat extracting assembly such that the desired temperature of the local heat transfer fluid in the heat pump return conduit and/or that the desired thermal load of the local heat extracting assembly is achieved.

The controlling of the local heat extracting assembly may comprise controlling a pump of the local heat extracting assembly and/or controlling the local heat pump.

The desired temperature of the local heat transfer fluid in the heat pump return conduit may be between 5°C and 15°C.

Controlling the local heat extracting assembly may further comprise controlling a local heat exchanger control valve for controlling the flow of local heat transfer fluid through the local heat exchanger to achieve a desired heat extraction from the cooling circuit. The heat exchanger control valve facilitates control of the amount of cooling that is being provided to the building.

In a third aspect a method for controlling a local energy distributing system according to the first aspect is provided. The method comprises: determining a desired ΔT of the local heat transfer fluid between the local feed conduit and the local return conduit of the local energy distributing system; measuring a temperature of local heat transfer fluid at least in the local return conduit; and controlling the local energy distributing system such that the desired is ΔT achieved, wherein the circulation of local heat transfer fluid through the local energy distributing grid of the local energy distributing system is controlled by means of the pump of each local heat extracting assembly.

Controlling the ΔT of the local heat transfer fluid facilitates providing beneficial operating conditions for the local heat extracting assemblies, which can be configured to function the most efficiently when working with the desired ΔT.

Controlling the local energy distributing system may further comprise controlling the pump of each local heat extracting assembly such that the desired temperature of the local heat transfer fluid in the heat pump return conduit and/or that the desired thermal load of the local heat extracting assembly is achieved.

The desired ΔT may be between 5°C and 25°C, preferably 20°C.

Controlling the local energy distributing system may further comprise controlling each pump to achieve a flow of heat transfer fluid through each local heat extracting assembly such that the temperature of the local heat transfer fluid in the local return conduit is between 5°C and 15°C.

Controlling the local energy distributing system may further comprise controlling at least one central control valve controlling the flow of heat transfer fluid from the heat source to the central exchanger, achieving a desired heat exchange to the local heat transfer fluid to achieve the desired ΔT of the local heat transfer fluid between the local feed conduit and the local return conduit.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 discloses a local heat extracting assembly.
Fig. 2 discloses a local heat distributing system.
Fig. 3 discloses flowchart of a method for controlling a local heat extracting assembly.
Fig. 4 discloses a flowchart for a method for controlling a local heat distributing system.
Fig. 5 discloses a diagram showing exemplary temperature variations in the local heat transfer fluid according to one embodiment.
Fig. 6 discloses a schematic outline of a local heat extracting assembly/local heat distributing system controller.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

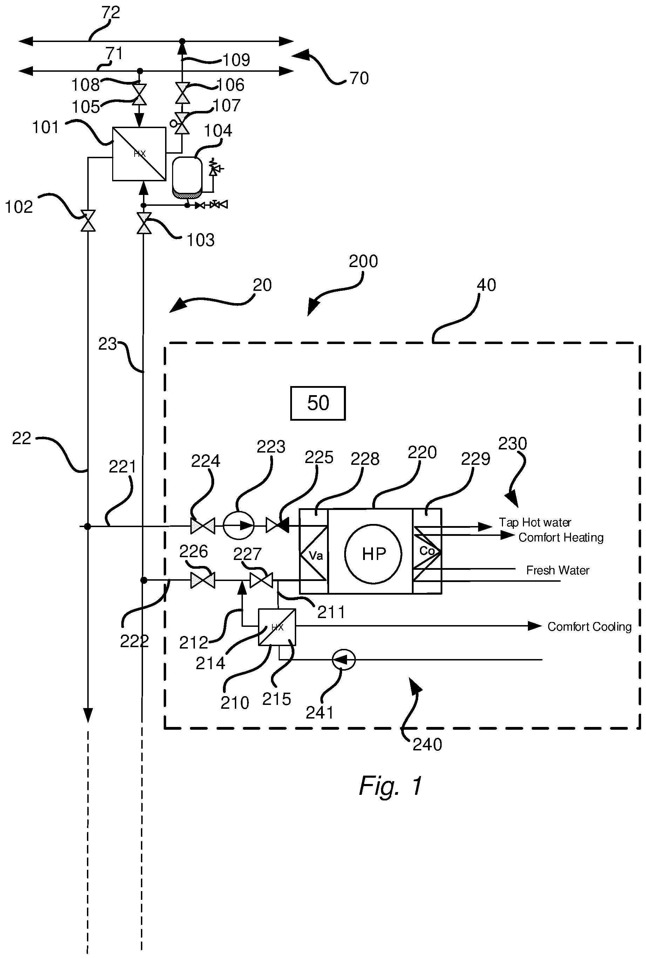

Referring to Fig. 1, a local heat extracting assembly 200 is shown. The local heat extracting assembly 200 is connectable to a local energy distributing grid 20, which is also shown in Fig. 1. The local energy distributing grid 20 comprises a local supply conduit 22 and a local return conduit 23. The local energy distributing grid 20 distributes local heat transfer fluid which is heated by a heat source 70. The heat source 70 may be a district heating system as known in the art which the local energy distributing grid 20 may draw heat from by means of a central heat exchanger 101. The district heating system 70 may comprise a supply conduit providing heat transfer fluid from a thermal plant (not shown) and a return conduit which transports cooled heat transfer fluid to the thermal plant. The heat transfer fluid may be any fluid suitable for heating (or cooling) at the thermal plant and that is suited for transport by means of the supply conduit and the return conduit, such as water.

The thermal plant may be a geothermal plant, an electrically powered plant for heating (or cooling) fluids, or may be driven by combustion of fuels, such as gas or oil. The thermal plant is configured to heat the heat transfer fluid and pump it through the district heating system 70. The supply conduit is considered as a hot conduit 71 and the return conduit is considered as a cold conduit 72.

As an alternative to the heat source 70 being a district heating system as described above, the heat source 70 may be a combined district heating and cooling grid as previously disclosed in, e.g., WO 2017/076868 filed by E.ON Sverige AB. In such case, the hot and cold conduits 71 and 72 are not to be seen as supply and return conduits but instead to be seen as the hot conduit 71 and the cold conduit 72 as disclosed in WO 2017/076868.

The heat transfer fluid of the heat source 70 is preferably fluidly separated from the local heat transfer fluid in the local energy distributing grid 20, the local energy distributing grid 20 drawing heat from the heat source 70 by means of the central heat exchanger 101.

The hot conduit 71 may be connected to the central heat exchanger 101 by a central supply conduit 108 having a central supply control valve 105 for controlling the flow heat transfer fluid thereto. The heat transfer fluid returns to the cold conduit 72 via central return conduit 109, the central return conduit may further comprise a first central return control valve 106 and in one embodiment a second central return control valve 107.

The local energy distributing grid 20 is in a preferred embodiment configured to extend in the ground, whereby the ambient temperature of the ground surrounding the local energy distributing grid 20 can under certain circumstances also function as an additional heat source 70. This effect is reinforced as the local supply conduit 22 is preferably insulated whereas the local return conduit 23 is not. In one embodiment, the local supply conduit 22 is made from insulated plastic piping designed for a maximum pressure of 0.6-1 MPa, and the local return conduit 23 is made from un-insulated plastic piping designed for a maximum pressure of 0.6-1MPa. In this context un-insulated shall be construed such that the piping does not have an extra layer of heat insulating material wrapped around the same. The piping is further typically designed for a maximum temperature of about 50°C. The piping of the local supply conduit 22 and the local return conduit 23 is consequently significantly less complex to be installed in the ground than corresponding conduits of a regular district heating system, as such conduits must be made to withstand higher temperatures and requires more insulation. The heat source 70, which preferably is a district heating system or a combined district heating and cooling system, does not have to extend all the way to the buildings 40 as is the case with prior art systems. The local energy distributing grid 20 functions as an intermediate heating/cooling grid which can use lower temperature local heat transfer fluid and that is consequently easier to install and further less prone to heat losses to the ground.

The returning local heat transfer fluid in the un-insulated local return conduit 23 can draw thermal energy from ground when the ground surrounding the conduit 23 has a higher temperature than the returning heat transfer fluid. This reduces the thermal load placed on the central heat exchanger 101 by the local energy distributing grid 20 and under certain circumstances may the ground heating effect on the local energy distributing grid 20 alone be sufficient to meet the thermal loads placed on the local energy distributing grid 20 by the local heat extracting assembly 200.

The local supply conduit 22 and/or the local return conduit 23 may comprise a local supply conduit control valve 102 and a local return conduit control valve 103 which are configured to facilitate control of the flow of local heat transfer fluid to/from the central heat exchanger 101. Further, the local energy distributing grid 20 may comprise an expansion vessel 104 connected to the local return conduit 23.

The local heat extracting assembly 200 comprises a local heat pump 220. The heat pump 220 could be formed in many possible ways as is realized by a person skilled in the art, the teachings herein are not limited to any particular type of heat pump 200. In a preferred embodiment however, the heat pump 220 comprises an internal heat transfer fluid being circulated between a heat extracting side 228 having a vaporizer and a heat depositing side 29 having a condenser. The heat extracting side 228 extracts heat from the local heat transfer fluid supplied to the local heat pump 220 via a heat pump supply conduit 221 connected to the local supply conduit 22, the cooled local heat transfer fluid is then returned via a heat pump return conduit 222 connected to the local return conduit 23. The local heat pump 220 pumps the heat from the local heat transfer fluid to a fluid of a heating circuit 230 of the building 40. The heat could be used both for comfort heating purposes as well as for providing tap hot water by heating fresh water.

Furthermore, the local heat extracting assembly 200 comprises a local heat exchanger 210. The local heat exchanger could be formed in many possible ways as is realized by a person skilled in the art, for instance a tube heat exchanger or a plate heat exchanger could be used. The teachings herein are not limited to a particular type of heat exchanger. The local heat exchanger 210 comprises a heat extraction side 215 connected to a cooling circuit 240 arranged in the building 40, and a heat depositing side 214 comprising an inlet 211 and an outlet 212 both connected to the heat pump return conduit 222. In one embodiment, the inlet 211 connects to the heat pump return conduit 222 between the local heat pump 220 and a local heat exchanger control valve 227, while the outlet 212 connects to the heat pump return conduit 222 between a heat pump return control valve 226 and the local heat exchanger control valve 227. The outlet 212 thus connects downstream of the inlet 211 of the local heat exchanger 210 on the local heat pump return conduit 222. The local heat exchanger control valve 227 allows control of the amount of local heat transfer fluid that passes either directly through the heat pump return conduit 222 to the local return conduit 23 or through the heat depositing side 214 of the local heat exchanger 210.

The local heat exchanger 210 is configured to extract heat from cooling fluid of the cooling circuit 240 for providing comfort cooling in the building 40 and deposit the extracted heat to local heat transfer fluid of the heat pump return conduit 222. The cooling circuit 240 and the heating circuit 230 are fluidly separated from each other and from the local heat transfer fluid in the local energy distributing grid 20.

The local heat exchanger 210 is beneficial for the overall efficiency of the local heat extracting assembly 200, as it allows utilization of the heat generation in the building 40 and stores this heat in the local heat transfer fluid in the local energy distributing grid 20. For instance, not all heating that is generated in a building 40 comes from the heating circuit 230 even during colder periods. The building 40 may be heated by the sun during the day and/or from use of heat generating equipment and/or by people being present in the building. The local heat exchanger 210 and the cooling circuit 240 may during such periods when there is excess heat generation in the building 40 function to remove heat and store the heat in the local heat transfer fluid of the local energy distributing grid 20.

The heat stored in the local heat transfer liquid may be used during a period when the thermal load on the local heat pump 220 is higher, for instance during the night when there is generally less activity, lower ambient temperatures and no solar heating effect in the building 40. It may also be used by another local heat extracting assembly 200 connected to the same local energy distributing grid 20.

Modern buildings, especially residential housing but also commercial and public buildings, are becoming more and more efficient with improved insulation. This is beneficial during cold periods as less heat is lost from the building 40, but it may cause undesired elevated temperatures in the building 40 during periods with higher ambient temperatures. With the cooling circuit 240 and the local heat exchanger 210, this heat can be stored, not only lowering the temperature in the building 40 and avoiding uncomfortable temperature variations, but also allowing the local heat extracting assembly 200 to subsequently make use of this heat during colder periods to heat the building 40 using the local heat pump 220.

Furthermore, the cooling circuit 240 may be connected to a cooled space in the building 40 that needs cooling even during periods when the thermal load on the local heat pump 220 is high. The local heat exchanger 210 and the cooling circuit 240 can then provide heat to the local energy distributing grid 20 that can be used by the local heat pump 220, improving overall efficiency by reducing the need for adding heat to the local energy distributing grid 20 from the heat source 70.

Preferably, the cooling circuit 240 comprises a cooling circuit pump 241 for circulating the cooling fluid through the cooling circuit 240.

The local heat extracting assembly 200 could further comprise a pump 223 arranged on the heat pump supply conduit 221 being configured to pump local heat transfer fluid from the local feed conduit 22 via the local heat pump 220 and the local heat exchanger 210 to the local return conduit 23. The pump 223 is controlled to provide the desired flow rate of local heat transfer fluid that the local heat pump 220 requires in order to provide as high a coefficient of performance (COP) as possible.

The pump 223 may in one embodiment be arranged between a first heat pump supply control valve 224 and a second heat pump supply control valve 225 on the heat pump supply conduit 221.

The pump 223 may further be configured to be the circulation pump for the local energy distributing circuit 20, to which the local heat extracting assembly 200 is connected.

The local heat extracting assembly 200 may be configured to control the flow of local heat transfer fluid through the local heat extracting assembly 200 such that the temperature of the local heat transfer fluid in the heat pump return conduit 222 is between 5°C and 15°C, and for the local heat pump 220 and the local heat exchanger 210 to meet the thermal loads to which they are exerted. Controlling the temperature of the local heat transfer fluid returning from the local heat extracting assembly 200 facilitates maintaining a preferred ΔT between local supply conduit 22 and the local return conduit 23.

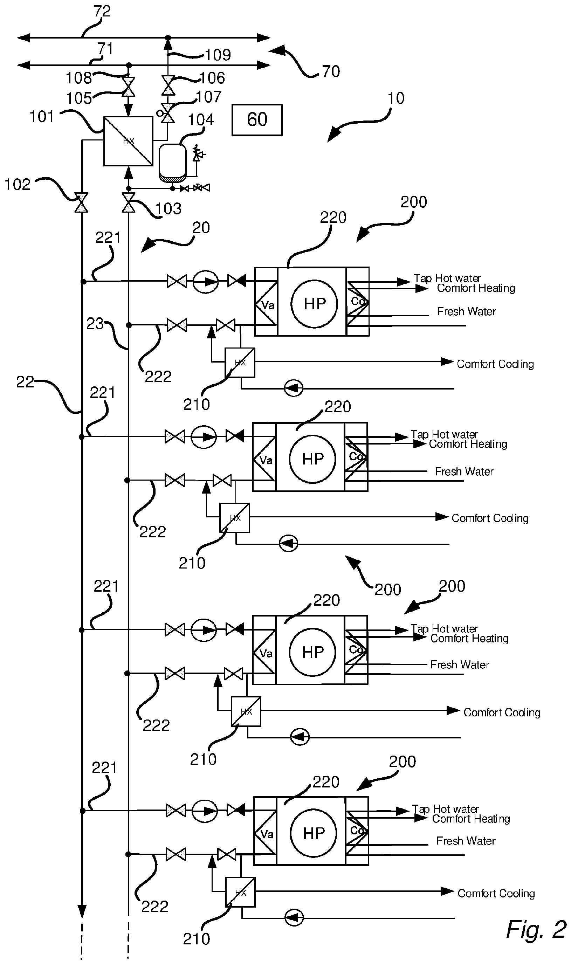

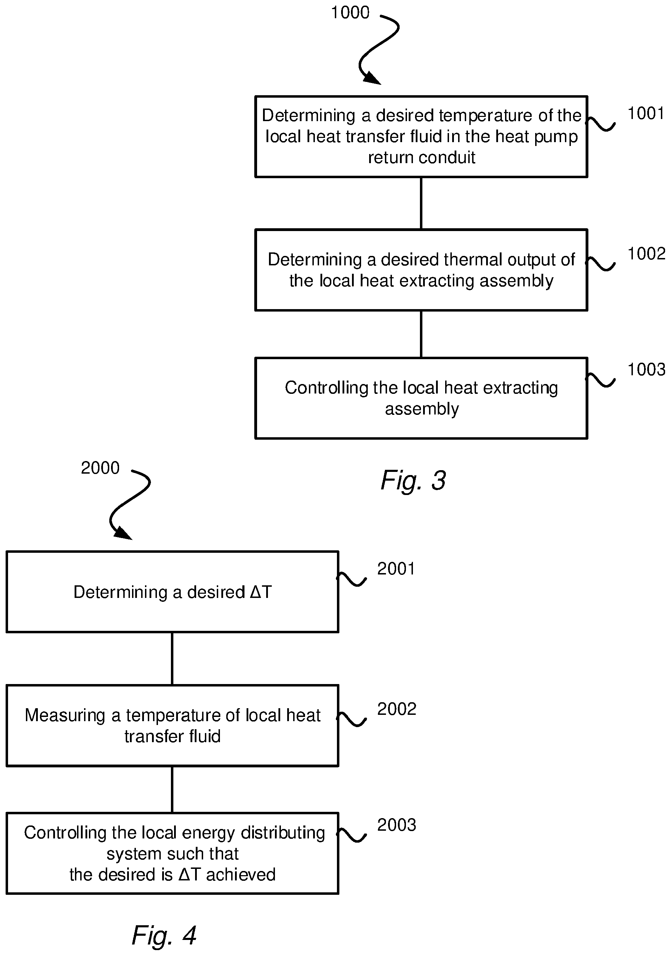

For the purpose of controlling the local heat extracting assembly 200, a local controller 50 may be provided. The local controller 50 being further explained in relation to Fig. 4. The local controller 50 may be configured to be connected to the local heat pump 220 and/or to the local heat exchanger and/or to the pump 223 and/or to each of the valves 224, 225, 226, 226 of the local heat extracting assembly 200. The controller 50 may in one embodiment further be connected to temperature sensors (not shown) in the local heat pump supply conduit 221, in the local heat pump return conduit 222, in the cooling circuit 240 and/or in the heating circuit 230. It may further be connected to one or several temperature sensors arranged in the building 40. The controller 50 may further be configured to be connected to a central controller 60 (shown in Fig. 2) of a local energy distributing system 10, allowing communication between the controller 50 of the local heat extracting assembly 200 and the controller 60 of the local energy distributing system 10 for providing overall improved efficiency.

In Fig. 1, only one local heat extracting assembly 200 is shown being arranged in the building 40, however each building 40 could comprise more than one heat extracting assembly 200. Furthermore, each local heat extracting assembly 200 could be configured to serve more than one building 40.

Turning now to Fig. 2, in which a local energy distributing system 10 is shown. The local energy distributing system 10 comprises a local energy distributing grid 20 comprising a local feed conduit 22 and a local return conduit 23. Reference is made to the description of Fig. 1 for a detailed description of the local energy distributing grid 20.

The local energy distributing system 10 further comprises a central heat exchanger 101 connectable to a heat source 70. The central heat exchanger 101 is configured to transfer heat from the heat source 70 to an outgoing flow of local heat transfer fluid in the local feed conduit 22. The central heat exchanger 101 is configured to provide an outgoing flow of local heat transfer fluid having a temperature of 10-30°C to achieve a desired ΔT of the local heat transfer fluid between the local feed conduit 22 and the local return conduit 23. The local energy distributing system 10 further comprises a plurality of local heat extracting assemblies 200 connected to the local energy distributing grid 20.

The heat source 70 may be a district heating system as known in the art or, as mentioned above, a combined district heating and cooling grid. The heat source 70 comprises a hot conduit 71 and a cold conduit 72, to which the central heat exchanger 101 is connected.

The local feed conduit 22 is in one embodiment made from insulated plastic piping designed for a maximum pressure of 0.6-1MPa, the local return conduit 23 may be made from un-insulated plastic piping designed for a maximum pressure of 0.6-1MPa. Typically, the piping of the local energy distributing system 20 is designed to withstand a maximum temperature of about 50°C. The ΔT of the local heat transfer fluid between the local feed conduit 22 and the local return conduit 23 is in an embodiment between 5°C and 25°C, preferably 20°C.

As is shown in Fig. 2, each local heat extracting assembly 200 may comprise a pump 223 configured to pump and circulate local heat transfer fluid from the local feed conduit 22 via the local heat pump 220 and the local heat exchanger 210 to the local return conduit 23. Preferably, the flow of local heat transfer fluid through the local energy distributing grid 20 is controlled by the pumps 223 of the local heat extracting assemblies 200.

A central controller 60 may be provided which may be connected to the control valves 105, 106, 107 controlling the flow of heat transfer fluid from the heat source 70 to the central heat exchanger 101 and vice versa. Furthermore, the central controller 60 may be connected to the local supply conduit control valve 102 and the local return conduit control valve 103 which are configured to facilitate control of the flow of local heat transfer fluid to/from the central heat exchanger 101. The central controller 60 may in one embodiment be configured to control the central heat exchanger 101 to achieve the desired ΔT of the local heat transfer fluid between the local feed conduit 22 and the local return conduit 23, which in an embodiment is between 5°C and 25°C, preferably 20°C, as well as an outgoing flow of local heat transfer fluid having a temperature of 10-30°C. It may be connected to temperature sensors (not shown) in the local feed conduit 22 and the local return conduit 23, and to temperature sensors (not shown) in the central supply conduit 108 and the central return conduit 109.

While each local heat extracting assembly 200 may be separately controlled, be it for heating and/or cooling, the local energy distribution system 10 may also be controlled as a whole.

The central controller 60 may therefore in one embodiment be connected to the each of the local heat extracting assemblies 200, preferably to the local controllers 50 thereof. Communication can thus be established between the local controllers 50 and the central controller 60 such that the local heat extracting assemblies 200 and the central heat exchanger 101 provides local heat transfer fluid with the preferred temperatures and flow rates to/from the local energy distributing grid 20 and to/from each of the local heat extracting assemblies 200. According to the invention the central controller 60 is configured to control the pumps 223 in each of the local heat extracting assemblies 200 to achieve a desired circulation of the local heat transfer fluid in the local energy distributing grid 20.

In Fig. 3 is a flowchart of a method 1000 for controlling a local heat extracting assembly 200 shown. The method 1000 comprises determining 1001 a desired temperature of the local heat transfer fluid in the heat pump return conduit 222. The desired temperature of the local heat transfer fluid in the heat pump return conduit 222 is one embodiment between 5°C and 15°C. The method further comprises determining 1002 a desired thermal load of the local heat extracting assembly 200, which is determined based on the thermal load placed on the local heat extracting assembly 200 and is typically defined by a set indoor temperature in the building and/or hot water usage. During a cold day, the thermal load is most likely higher than during a warmer day. It further depends on the desired temperature that is set in the building 40.

The local heat extracting assembly 200 is then controlled 1003 such that the desired temperature of the local heat transfer fluid in the heat pump return conduit 222 and/or that the desired thermal load of the local heat extracting assembly 200 is achieved. The controlling 1003 of the local heat extracting assembly 200 may comprise controlling a pump 223 of the local heat extracting assembly 200 and/or controlling the local heat pump 220.

The controlling 1003 may in one embodiment comprise controlling a local heat exchanger control valve 227 for controlling the flow of local heat transfer fluid through the local heat exchanger 210 to achieve a desired heat extraction from the cooling circuit 240, and thus to achieve a desired cooling of the building 40.

In Fig. 4 is a flowchart shown of a method 2000 for controlling a local energy distributing system 10 shown. The method comprises determining 2001 a desired ΔT of the local heat transfer fluid between the local feed conduit 22 and the local return conduit 23, the desired ΔT is in one embodiment between 5°C and 25°C, preferably 20°C.

The method 2000 further comprises measuring 2002 a temperature of local heat transfer fluid at least in the local return conduit 23 by means of a temperature sensor (not shown) in said local return conduit 23. The measuring 2002 may further comprises measuring a temperature of local heat transfer fluid in the local supply conduit 22 by means of a temperature sensor (not shown) in said local return conduit 22, for instance to ensure that the desired ΔT is achieved and such that the outgoing flow of local heat transfer fluid has a temperature of 10-30°C.

The local energy distributing system 10 is controlled 1003 such that the desired ΔT is achieved.

The controlling 2003 may in one embodiment in which each local heat extracting assembly 200 comprises a pump 223 further comprise controlling each pump 223 such that the desired thermal load and/or the thermal load for each local heat extracting assembly 200 is achieved. For instance, each pump 223 may be controlled to achieve a desired temperature of the local heat transfer fluid in the local return conduit 23 and/or in the heat pump return conduit 222. The controlling 2003 may further comprise controlling the heat pump 220 of each local heat extracting assembly 200 such that it meets the thermal loads placed thereupon as well as a desired return local heat transfer temperature of between 5°C and 15°C. The heat pump 220 may be controlled for instance by altering the heat pump cycle, altering the compression and/or the expansion in the heat pump 220, to meet the thermal load while also providing the desired returning local heat transfer fluid temperature.

In one embodiment, each pump 223 controls the flow of heat transfer fluid through each local heat extracting assembly 200 such that the temperature of the local heat transfer fluid in the heat pump return conduit 222 and/or the local return conduit 23 is between 5°C and 15°C.

In one embodiment, the controlling 1003 comprises controlling the circulation of local heat transfer fluid through the local energy distributing grid 20 by means of the pump 223 of each local heat extracting assembly 200.

Further still, the controlling 2003 may comprise controlling at least one central control valve 105, 106, 107 controlling the flow of heat transfer fluid from the heat source 70 to the central exchanger 101, achieving a desired heat exchange to the local heat transfer fluid to achieve the desired ΔT of the local heat transfer fluid between the local feed conduit 22 and the local return conduit 23.

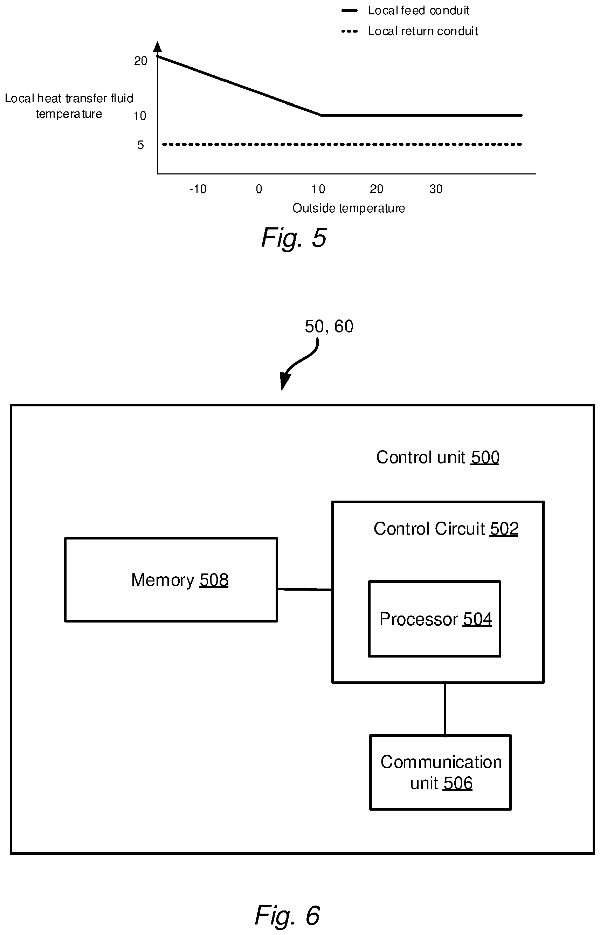

In Fig. 5 is a diagram shown exemplifying how the temperatures of local heat transfer fluid in the local feed conduit 22 and in the local return conduit 23 may vary with varying outside temperature. It is to be understood that while it is not necessarily a direct link between the outside temperature and the temperatures of the local feed conduit 22 and the local return conduit 23, the outside temperature does affect the thermal load from the respective building 40 on the local heat distributing system 10 and thus indirectly affects the temperatures needed. The diagram shown in Fig. 5 should therefore not be construed as limiting but as an example for illustrating one application of the teachings herein.

The temperature of the local heat transfer fluid in the local return conduit 23 is in the example shown in Fig. 5 kept at 5°C for the entire outside temperature span shown. However, the local heat exchangers 210 may as mentioned above cause a rise of the temperature of the local heat transfer fluid in the local return conduit 23, effectively reducing the load on the central heat exchanger.

The local heat extracting assemblies 20 may however be controlled as a unit to achieve the desired temperature of the returning local heat transfer fluid.

The local heat transfer fluid in the local feed conduit decreases with increasing outside temperature until it reaches approximately 10°C. The central heat exchanger 101 being controlled to provide a sufficiently high temperature of the outgoing local heat transfer fluid in the local feed conduit 22 such that the local heat extracting assemblies 20 can meet their respective thermal loads while providing the desired return local heat transfer temperature of approximately 5°C. When the outside temperature reaches above a certain temperature, in the example shown in Fig. 5 approximately 10°, it is sufficient with a ΔT of approximately 5°C for the local heat extracting assemblies 20 to meet their respective thermal loads.

As mentioned, the above is to be seen as an example. For instance, the temperature of the local heat transfer fluid in the local return conduit 23 may be controlled to vary and the temperature curves of both the local feed conduit 22 and the local return conduit 23 may differ depending on the application.

Turning to Fig. 6 in which a schematic illustration of the local heat extracting assembly controller 50/local energy system controller 60 is shown. The respective controller 50, 60, which may be formed by a single unit, is configured to carry out overall control of functions and operations of the local heat extracting assembly 200 and of the local energy distributing system 10 respectively, and thus comprises a control unit 500 which may be associated with a memory 508. The control unit 500 may include a control circuit 502 and an associated processor 504, such as a central processing unit (CPU), microcontroller, or microprocessor. The processor 504 is configured to execute program code stored in the memory 508, in order to carry out functions and operations of the controller 124, 224.

The memory 508 may be one or more of a buffer, a flash memory, a hard drive, a removable media, a volatile memory, a non-volatile memory, a random access memory (RAM), or another suitable device. In a typical arrangement, the memory 508 may include a non-volatile memory for long term data storage and a volatile memory that functions as system memory for the control unit 500. The memory 508 may exchange data with the control unit 500 over a data bus. Accompanying control lines and an address bus between the memory 508 and the control unit 500 also may be present.

The control unit 500 may further comprise a communication unit 506, connected to the control circuit 502, configured to allow remote control of units of the local heat extracting assemble 200 and of the local energy distributing system 10 as well as in one embodiment communication therebetween and in one embodiment between several local heat extracting assemblies 200. A unit of an assembly may be a controller, a pump, a valve, a heat pump, a heat exchanger, etc. The communication path over which the communication is made may be wired or wireless. The communication may include data transfers, and the like. Data transfers may include, but are not limited to, downloading and/or uploading data and receiving or sending messages. The data may be processed by the control unit 500. The processing may include storing the data in a memory, e.g. the memory 508 of the control unit 500, executing operations or functions, and so forth. The communication may be individual for each units of the assembly 200 and the local energy distributing system 10.

Functions and operations of the control unit 500 may be embodied in the form of executable logic routines (e.g., lines of code, software programs, etc.) that are stored on a non-transitory computer readable medium (e.g., the memory 508) of the control unit 500 and are executed by the control circuit 502 (e.g., using the processor 504). Furthermore, the functions and operations of the control unit 500 may be a stand-alone software application or form a part of a software application that carries out additional tasks related to the control unit 500. The described functions and operations may be considered a method that the corresponding device is configured to carry out. Also, while the described functions and operations may be implemented in software, such functionality may as well be carried out via dedicated hardware or firmware, or some combination of hardware, firmware and/or software.

It will be appreciated that the present invention is not limited to the embodiments shown. Several modifications and variations are thus conceivable within the scope of the invention which thus is exclusively defined by the appended claims.

## Claims

1. A local energy distributing system (10) comprising:
a local energy distributing grid (20) comprising a local feed conduit (22) and a local return conduit (23);
a central heat exchanger (101) connectable to a heat source (70), wherein the central heat exchanger (101) is configured to exchange heat from the heat source to an outgoing flow of local heat transfer fluid in the local feed conduit (22), the central heat exchanger (101) being configured to provide an outgoing flow of local heat transfer fluid having a temperature of 10-30°C to achieve a desired ΔT of the local heat transfer fluid between the local feed conduit (22) and the local return conduit (23); and
a plurality of local heat extracting assemblies (200), each being connectable to the local energy distributing grid (20), wherein each local heat extracting assembly (200) comprises:
a local heat pump (220) having a heat pump feed conduit (221) connectable to the local feed conduit (22) and a heat pump return conduit (222) connectable to the local return conduit (23), the local heat pump (220) being configured to pump heat from local heat transfer fluid of the local energy distributing grid (20) to a heating fluid of a heating circuit (230) configured to circulate the heating fluid in a building (40) for providing comfort heating and/or tap hot water; and
a local heat exchanger (210) having a heat extraction side (215) connectable to a cooling circuit (240) arranged in the building (40), and a heat depositing side (214) comprising an inlet (211) and an outlet (212) both connected to the heat pump return conduit (222), the local heat exchanger (210) being configured to extract heat from cooling fluid of the cooling circuit (240) for providing comfort cooling in the building (40) and deposit the extracted heat to local heat transfer fluid of the heat pump return conduit (222); and
a pump (223) configured to pump local heat transfer fluid from the local feed conduit (22) via the local heat pump (220) and the local heat exchanger (210) to the local return conduit (23);
**characterized in that** the flow of local heat transfer fluid through the local energy distribution system (20) is controlled by the pumps (223) of the local heat extracting assemblies (200) and **in that** the local energy distributing system (10) further comprising a central controller (60) configured to control the respective pump (223) in each of the local heat extracting assemblies (200) to achieve a desired circulation of the local heat transfer fluid in the local energy distributing grid (20).

2. The local energy distribution system (10) according to claim 1,
wherein the local feed conduit (22) is made from insulated plastic piping designed for a maximum pressure of 0.6-1MPa, and/or wherein the local return conduit (23) is made from un-insulated plastic piping designed for a maximum pressure of 0.6-1MPa.

3. A method (2000) for controlling a local energy distributing system (10) according to claim 1, the method (2000) comprising:
determining (2001) a desired ΔT of the local heat transfer fluid between the local feed conduit (22) and the local return conduit (23) of the local energy distributing system (10);
measuring (2002) a temperature of local heat transfer fluid at least in the local return conduit (23); and
controlling (2003) the local energy distributing system (10) such that the desired is ΔT achieved, wherein the circulation of local heat transfer fluid through the local energy distributing grid (20) of the local energy distributing system (10) is controlled by means of the pump (223) of each local heat extracting assembly (200).

4. The method (2000) according to claim 3, wherein controlling (2003) the local energy distributing system (10) further comprises controlling each pump (223) such that the desired temperature of the local heat transfer fluid in the heat pump return conduit (222) of each local heat extracting assembly (200) is achieved and/or such that the desired thermal load of the local heat extracting assembly (200) is achieved.

5. The method (2000) according to claim 4, wherein controlling (2003) the local energy distributing system (10) comprises controlling each pump (223) to achieve a flow of heat transfer fluid through each local heat extracting assembly (200) such that the temperature of the local heat transfer fluid in the local return conduit (23) is between 5°C and 15°C.

6. The method (2000) according to any one of claims 3 to 5, wherein controlling (2003) the local energy distributing system (10) further comprises controlling at least one central control valve (105, 106, 107) controlling the flow of heat transfer fluid from the heat source (70) to the central exchanger (101), achieving a desired heat exchange to the local heat transfer fluid to achieve the desired ΔT of the local heat transfer fluid between the local feed conduit (22) and the local return conduit (23).

## Patentansprüche

1. Lokales Energieverteilungssystem (10), umfassend:
ein lokales Energieverteilungsnetz (20), das eine lokale Vorlaufleitung (22) und eine lokale Rücklaufleitung (23) umfasst;
einen zentralen Wärmetauscher (101), der mit einer Wärmequelle (70) verbindbar ist, wobei der zentrale Wärmetauscher (101) dafür ausgelegt ist, Wärme von der Wärmequelle auf einen abgehenden Strom von lokalem Wärmeübertragungsfluid in der lokalen Vorlaufleitung (22) zu übertragen, wobei der zentrale Wärmetauscher (101) dafür ausgelegt ist, einen abgehenden Strom von lokalem Wärmeübertragungsfluid mit einer Temperatur von 10-30 °C bereitzustellen, um ein gewünschtes ΔT des lokalen Wärmeübertragungsfluids zwischen der lokalen Vorlaufleitung (22) und der lokalen Rücklaufleitung (23) zu erreichen; und
mehrere lokale Wärmeextraktionsanordnungen (200), die jeweils mit dem lokalen Energieverteilungsnetz (20) verbindbar sind, wobei jede lokale Wärmeextraktionsanordnung (200) umfasst:
eine lokale Wärmepumpe (220), die eine mit der lokalen Vorlaufleitung (22) verbindbare Wärmepumpen-Vorlaufleitung (221) und eine mit der lokalen Rücklaufleitung (23) verbindbare Wärmepumpen-Rücklaufleitung (222) aufweist, wobei die lokale Wärmepumpe (220) dafür ausgelegt ist, Wärme von dem lokalen Wärmeübertragungsfluid des lokalen Energieverteilungsnetzes (20) zu einem Heizfluid eines Heizkreislaufs (230) zu pumpen, der dafür ausgelegt ist, das Heizfluid in einem Gebäude (40) zirkulieren zu lassen, um Komfortheizung und/oder heißes Leitungswasser bereitzustellen; und
einen lokalen Wärmetauscher (210), der eine Wärmeentzugsseite (215), die mit einem im Gebäude (40) angeordneten Kühlkreislauf (240) verbindbar ist, und eine Wärmeabgabeseite (214), die einen Einlass (211) und einen Auslass (212) umfasst, die beide mit der Wärmepumpen-Rücklaufleitung (222) verbunden sind, aufweist, wobei der lokale Wärmetauscher (210) dafür ausgelegt ist, einem Kühlfluid des Kühlkreislaufs (240) Wärme zu entziehen, um Komfortkühlung im Gebäude (40) bereitzustellen und die entzogene Wärme an das lokale Wärmeübertragungsfluid der Wärmepumpen-Rücklaufleitung (222) abzugeben; und
eine Pumpe (223), die dafür ausgelegt ist, lokales Wärmeübertragungsfluid von der lokalen Vorlaufleitung (22) über die lokale Wärmepumpe (220) und den lokalen Wärmetauscher (210) zur lokalen Rücklaufleitung (23) zu pumpen;
**dadurch gekennzeichnet, dass** der Strom des lokalen Wärmeübertragungsfluids durch das lokale Energieverteilungssystem (10) von den Pumpen (223) der lokalen Wärmeextraktionsanordnungen (200) gesteuert wird, und dadurch, dass das lokale Energieverteilungssystem (10) ferner eine zentrale Steuereinheit (60) umfasst, die dafür ausgelegt ist, die jeweilige Pumpe (223) in jeder der lokalen Wärmeextraktionsanordnungen (200) zu steuern, um eine gewünschte Zirkulation des lokalen Wärmeübertragungsfluids in dem lokalen Energieverteilungsnetz (20) zu erreichen.

2. Lokales Energieverteilungssystem (10) nach Anspruch 1, wobei die lokale Vorlaufleitung (22) aus isolierten Kunststoffrohren hergestellt ist, die für einen maximalen Druck von 0,6-1 MPa ausgelegt sind, und/oder wobei die lokale Rücklaufleitung (23) aus nicht isolierten Kunststoffrohren hergestellt ist, die für einen maximalen Druck von 0,6-1 MPa ausgelegt sind.

3. Verfahren (2000) zur Steuerung eines lokalen Energieverteilungssystems (10) nach Anspruch 1, wobei das Verfahren (2000) umfasst:
Bestimmen (2001) eines gewünschten ΔT des lokalen Wärmeübertragungsfluids zwischen der lokalen Vorlaufleitung (22) und der lokalen Rücklaufleitung (23) des lokalen Energieverteilungssystems (10);
Messen (2002) einer Temperatur des lokalen Wärmeübertragungsfluids mindestens in der lokalen Rücklaufleitung (23); und
Steuern (2003) des lokalen Energieverteilungssystems (10) derart, dass das gewünschte ΔT erreicht wird, wobei die Zirkulation des lokalen Wärmeübertragungsfluids durch das lokale Energieverteilungsnetz (20) des lokalen Energieverteilungssystems (10) mittels der Pumpe (223) jeder lokalen Wärmeextraktionsanordnung (200) gesteuert wird.

4. Verfahren (2000) nach Anspruch 3, wobei das Steuern (2003) des lokalen Energieverteilungssystems (10) ferner das Steuern jeder Pumpe (223) umfasst, derart, dass die gewünschte Temperatur des lokalen Wärmeübertragungsfluids in der Wärmepumpen-Rücklaufleitung (222) jeder lokalen Wärmeextraktionsanordnung (200) erreicht wird, und/oder derart, dass die gewünschte Wärmebelastung der lokalen Wärmeextraktionsanordnung (200) erreicht wird.

5. Verfahren (2000) nach Anspruch 4, wobei das Steuern (2003) des lokalen Energieverteilungssystems (10) das Steuern jeder Pumpe (223) umfasst, um einen solchen Strom von Wärmeübertragungsfluid durch jede lokale Wärmeextraktionsanordnung (200) zu erreichen, dass die Temperatur des lokalen Wärmeübertragungsfluids in der lokalen Rücklaufleitung (23) zwischen 5 °C und 15 °C liegt.

6. Verfahren (2000) nach einem der Ansprüche 3 bis 5, wobei das Steuern (2003) des lokalen Energieverteilungssystems (10) ferner das Steuern mindestens eines zentralen Steuerventils (105, 106, 107) umfasst, das den Strom von Wärmeübertragungsfluid von der Wärmequelle (70) zum zentralen Wärmetauscher (101) steuert, so dass ein gewünschter Wärmeaustausch zum lokalen Wärmeübertragungsfluid hin erreicht wird, um das gewünschte ΔT des lokalen Wärmeübertragungsfluids zwischen der lokalen Vorlaufleitung (22) und der lokalen Rücklaufleitung (23) zu erreichen.

## Revendications

1. Système de distribution d'énergie local (10) comprenant :
un réseau de distribution d'énergie local (20) comprenant un conduit d'alimentation local (22) et un conduit de retour local (23) ;
un échangeur de chaleur central (101) apte à être raccordé à une source de chaleur (70), dans lequel l'échangeur de chaleur central (101) est configuré pour échanger de la chaleur à partir de la source de chaleur vers un flux sortant de fluide caloporteur local dans le conduit d'alimentation local (22), l'échangeur de chaleur central (101) étant configuré pour fournir un flux sortant de fluide caloporteur local présentant une température de 10 à 30 °C pour l'obtention d'une ΔT souhaitée du fluide caloporteur local entre le conduit d'alimentation local (22) et le conduit de retour local (23) ; et
une pluralité d'ensembles d'extraction de chaleur locaux (200), respectivement aptes à être raccordés au réseau de distribution d'énergie local (20), dans lequel chaque ensemble d'extraction de chaleur local (200) comprend :
une pompe à chaleur locale (220) présentant un conduit d'alimentation de pompe à chaleur (221) apte à être raccordé au conduit d'alimentation local (22) et un conduit de retour de pompe à chaleur (222) apte à être raccordé au conduit de retour local (23), la pompe à chaleur locale (220) étant configurée pour pomper de la chaleur à partir du fluide caloporteur local du réseau de distribution d'énergie local (20) vers un fluide chauffant d'un circuit chauffant (230) configuré pour faire circuler le fluide chauffant dans un bâtiment (40) afin d'apporter un chauffage de confort et/ou de l'eau chaude du robinet ; et
un échangeur de chaleur local (210) comportant un côté extraction de chaleur (215) apte à être raccordé à un circuit de refroidissement (240) installé dans le bâtiment (40), et un côté délivrance de chaleur (214) comprenant une entrée (211) et une sortie (212) toutes deux raccordées au conduit de retour de pompe à chaleur (222), l'échangeur de chaleur local (210) étant configuré pour extraire de la chaleur à partir d'un fluide de refroidissement du circuit de refroidissement (240) afin de fournir un refroidissement de confort dans le bâtiment (40) et de délivrer la chaleur extraite au fluide caloporteur local du conduit de retour de pompe à chaleur (222) ; et
une pompe (223) configurée pour pomper du fluide caloporteur local à partir du conduit d'alimentation local (22) par le biais de la pompe à chaleur locale (220) et de l'échangeur de chaleur local (210) vers le conduit de retour local (23) ;
**caractérisé en ce que** le flux de fluide caloporteur local à travers le système de distribution d'énergie local (10) est commandé par les pompes (223) des ensembles d'extraction de chaleur locaux (200) et **en ce que** le système de distribution d'énergie local (10) comprend en outre un dispositif de commande central (60) configuré pour commander la pompe (223) respective dans chacun des ensembles d'extraction de chaleur locaux (200) afin d'obtenir une circulation souhaitée du fluide caloporteur local dans le réseau de distribution d'énergie local (20).

2. Système de distribution d'énergie local (10) selon la revendication 1, dans lequel le conduit d'alimentation local (22) est constitué de tuyaux en plastique isolés conçus pour une pression maximale de 0,6 à 1 MPa, et/ou dans lequel le conduit de retour local (23) est constitué de tuyaux en plastique non isolés conçus pour une pression maximale de 0,6 à 1 MPa.

3. Procédé (2000) destiné à commander un système de distribution d'énergie local (10) selon la revendication 1, le procédé (2000) comprenant :
la détermination (2001) d'une ΔT souhaitée du fluide caloporteur local entre le conduit d'alimentation local (22) et le conduit de retour local (23) du système de distribution d'énergie local (10) ;
la mesure (2002) d'une température du fluide caloporteur local au moins dans le conduit de retour local (23) ; et
la commande (2003) du système de distribution d'énergie local (10) de manière à ce que la ΔT soit atteinte, dans lequel la circulation du fluide caloporteur local à travers le réseau de distribution d'énergie local (20) du système de distribution d'énergie local (10) est commandée au moyen de la pompe (223) de chaque ensemble d'extraction de chaleur local (200).

4. Procédé (2000) selon la revendication 3, dans lequel la commande (2003) du système de distribution d'énergie local (10) comprend en outre la commande de chaque pompe (223) de manière à ce que la température souhaitée du fluide caloporteur local dans le conduit de retour de pompe à chaleur (222) de chaque ensemble d'extraction de chaleur local (200) soit atteinte et/ou de manière à ce que la charge thermique souhaitée de l'ensemble d'extraction de chaleur local (200) soit atteinte.

5. Procédé (2000) selon la revendication 4, dans lequel la commande (2003) du système de distribution d'énergie local (10) comprend la commande de chaque pompe (223) pour l'obtention d'un flux de fluide caloporteur local à travers chaque ensemble d'extraction de chaleur local (200) de manière à ce que la température du fluide caloporteur local dans le conduit de retour local (23) soit comprise entre 5 °C et 15 °C.

6. Procédé (2000) selon l'une quelconque des revendications 3 à 5, dans lequel la commande (2003) du système de distribution d'énergie local (10) comprend en outre la commande d'au moins une soupape de commande centrale (105, 106, 107) commandant le flux de fluide caloporteur à partir de la source de chaleur (70) vers l'échangeur de chaleur central (101), pour l'obtention d'un échange de chaleur souhaité vers le fluide caloporteur local afin d'obtenir la ΔT souhaitée du fluide caloporteur local entre le conduit d'alimentation local (22) et le conduit de retour local (23).
